# EUROPÄISCHE PATENTANMELDUNG

(11) **EP 2 703 163 A2**
(43) Veröffentlichungstag der Anmeldung: **05.03.2014**
(21) Anmeldenummer: 13182145.6
(22) Anmeldetag: 29.08.2013
(51) Int. Cl.: B41F 33/00, G01J 3/46

(54) **Farbmesseinrichtung für Druckmaschinen**

(30) Priorität: 04.09.2012 DE 102012108207
(71) Anmelder: Eltromat GmbH, 33818 Leopoldshöhe (DE)
(72) Erfinder: Schönfeld, Volker, 33332 Gütersloh (DE); Sabine, Riemenschneider, 33649 Bielefeld (DE)
(74) Vertreter: Ter Meer Steinmeister & Partner

(57) **Zusammenfassung**

Farbmesseinrichtung für Druckmaschinen, mit einem in die Druckmaschine einzubauenden Bordspektrometer (10) zur Aufnahme eines Spektrums eines Punktes auf einer Bedruckstoffbahn (15), und mit einer elektronischen Verarbeitungseinheit (20) zur Auswertung des Spektrums und zur Erzeugung von Rohdaten (R), die das Ergebnis der Farbmessung charakterisieren, dadurch gekennzeichnet, dass die Verarbeitungseinheit (20) ein auf ein externes Spektrometer (26) kalibrierbares Umrechnungsmodul (24) enthält, das dazu eingerichtet ist, die Rohdaten (R) in Ausgabedaten (A) zu konvertieren, die dem erwarteten Ergebnis einer Farbmessung mit dem externen Spektrometer (26) für denselben Punkt auf der Bedruckstoffbahn entsprechen.

## Beschreibung

Die Erfindung betrifft eine Farbmesseinrichtung für Druckmaschinen, mit einem in die Druckmaschine einzubauenden Bordspektrometer zur Aufnahme eines Spektrums eines Punktes auf einer Bedruckstoffbahn, und mit einer elektronischen Verarbeitungseinheit zur Auswertung des Spektrums und zur Erzeugung von Rohdaten, die das Ergebnis der Farbmessung charakterisieren.

In der Druckindustrie ist es üblich, die Farbwerte von ausgewählten Punkten auf einem Druckerzeugnis oder einem Prüfdruck (Proof) mit Hilfe eines Spektrometers zu messen, so dass Farbabweichungen zwischen einem durch den Proof repräsentierten gewünschten Ergebnis und dem tatsächlichen Druckergebnis anhand des Spektrums quantifiziert und bewertet werden können. Mit dem Begriff "Spektrum" wird hier allgemein eine Funktion bezeichnet, die die Intensitätsverteilung von Licht, das von einer Lichtquelle emittiert oder von einem Objekt, z. B. einem Punkt auf der Bedruckstoffbahn, remittiert wird, in Abhängigkeit von der Wellenlänge angibt. Mehrere Hersteller bieten Spektrometer in der Form von Handgeräten an, die auf die gewünschte Stelle des Proofs oder des Druckerzeugnisses aufgesetzt werden können. Es ist auch bekannt, Spektrometer, die hier zur besseren Unterscheidung als Bordspektrometer bezeichnet werden sollen, unmittelbar in die Druckmaschine einzubauen, so dass Farbmessungen bereits während des Druckprozesses an der durchlaufenden Bedruckstoffbahn vorgenommen werden können.

Es hat sich jedoch gezeigt, dass die Messergebnisse, die man mit verschiedenen Spektrometern für dasselbe Messobjekt erhält, nicht unbeträchtlich voneinander abweichen. Signifikante Abweichungen bestehen nicht nur zwischen Bordspektrometern und Handgeräten, sondern auch zwischen Handgeräten verschiedener Hersteller und sogar zwischen Handgeräten derselben Produktreihe eines Herstellers.

Aufgabe der Erfindung ist es, die Vergleichbarkeit der mit einem Bordspektrometer erhaltenen Ergebnisse mit den entsprechenden Messergebnissen anderer Spektrometer zu verbessern.

Diese Aufgabe wird bei einer Farbmesseinrichtung der oben genannten Art dadurch gelöst, dass die Verarbeitungseinheit ein auf ein externes Spektrometer kalibrierbares Umrechnungsmodul enthält, das dazu eingerichtet ist, die Rohdaten in Ausgabedaten zu konvertieren, die dem erwarteten Ergebnis einer Farbmessung mit dem externen Spektrometer für denselben Punkt auf der Bedruckstoffbahn entsprechen.

So kann der Drucker beispielsweise mit Hilfe eines Handgerätes die Farbe einer ausgewählten Stelle auf einem Proof messen und dann während des Druckprozesses die mit dem Bordspektrometer erhaltenen Ergebnisse mit den vom Handgerät gelieferten Farbwerten vergleichen, so dass unzulässige Farbabweichungen schon während des Druckprozesses festgestellt werden können.

Vorteilhafte Ausgestaltungen und Weiterbildungen der Erfindung sind in den Unteransprüchen angegeben.

Bei den Rohdaten und den Ausgabedaten kann es sich um Farbwerte in irgendeinem geeigneten Farbraum (z.B. CIE-Lab) oder um Farbabweichungen ΔE von einem Referenzwert handeln oder auch unmittelbar um die Spektren selbst. In der Literatur sind Algorithmen bekannt, mit denen Spektren rechnerisch im Hinblick auf verschiedene Fehlerarten korrigiert werden können, beispielsweise im Hinblick auf fotometrische Nullpunktsfehler, lineare oder nichtlineare fotometrische Skalenfehler, lineare oder nichtlineare Wellenlängen-Skalenfehler und Bandbreitenfehler. Je nach betrachteten Fehlerarten wird ein Satz von Korrekturparametern erstellt, mit dem das von einem Spektrometer aufgenommene Spektrum korrigiert, d.h., in ein Spektrum umgerechnet werden kann, das man von einem "idealen" Spektrometer erhalten hätte. Mit denselben Algorithmen lässt sich selbstverständlich auch das von einem Spektrometer erhaltene Spektrum in ein Spektrum umrechnen, das von einem anderen realen Spektrometer erhalten wurde. Die Korrekturparameter lassen sich beispielsweise durch lineare Regression anhand von Spektren bestimmen, die man mit den beiden Spektrometern aufgenommen wurden. Beispiele für solche Algorithmen werden beschrieben in Doletzalek, Kraushaar: "Korrektur von Messfehlern bei Farbmessgeräten", FOGRA Forschungsbericht Nr. 52034, FOGRA-FB/DE--2005/6--DE+52.034, München, Juli 2005, sowie in Berns, Petersen: Empirical Modelling of Systematic Spectrophotometric Errors, COLOUR research and application, Band 3, Nr. 4, August 1988 (CCC 0361-2317/88/040243).

Um das Umrechnungsmodul auf ein bestimmtes externes Spektrometer zu kalibrieren, können die Spektren eines oder mehrerer Farbfelder mit dem externen Spektrometer (Handgerät) aufgenommen und gespeichert werden. Außerdem werden dieselben Farbfelder in der Druckmaschine mit dem Bordspektrometer ausgemessen, so dass für jedes Farbfeld durch lineare Regression ein Satz von Korrekturparametern bestimmt werden kann. Wenn das Bordspektrometer später für reale Messungen benutzt wird, so wird für die Umrechnung eines vom Bordspektrometer aufgenommenen Spektrums jeweils der Satz von Korrekturparametern ausgewählt, der zu einem Farbfeld gehört, dessen Spektrum dem aufgenommenen Spektrum am ähnlichsten ist. Wenn die zur Kalibrierung benutzten Farbfelder den Bereich in Frage kommender Farben abdecken, lässt sich so mit Korrekturalgorithmen niedriger Ordnung die Abweichung zwischen den Ergebnissen verschiedener Spektrometer weitgehend eliminieren.

Da das Bordspektrometer in der Druckmaschine auf einen Abschnitt der Bedruckstoff bahn gerichtet ist, der über eine rotierende Walze der Druckmaschine geführt wird, muss das Spektrometer zu dem betreffenden Punkt auf der Bedruckstoffbahn notwendig einen gewissen Abstand haben. Dieser Abstand hat jedoch einen Einfluss auf die Form des aufgenommenen Spektrums und sollte deshalb bei der Umrechnung des Spektrums berücksichtigt werden.

In einer bevorzugten Ausführungsform ist das Bordspektrometer beweglich an einer Führungsscheine angeordnet, die sich quer über die Bedruckstoffbahn erstreckt, so dass in Breitenrichtung (x-Richtung) der Bedruckstoffbahn jeder gewünschte Punkt angefahren werden kann. Aufgrund unvermeidlicher Toleranzen ist der Abstand zwischen Spektrometer und Bedruckstoffbahn in diesem Fall von der jeweiligen x-Position abhängig, so dass der Abstand für jede x-Position gesondert gemessen und korrigiert werden sollte. Gemäß einem selbständigen Nebenaspekt der Erfindung wird die Abstandsabhängigkeit des Spektrums für eine einfache Abstandsmessung genutzt. Dazu wird ein Spektrum eines Standardmessobjekts aufgenommen, von dem ein Sollspektrum sowie dessen Abstandsabhängigkeit bekannt sind, und dann wird durch Vergleich des gemessenen Spektrums mit dem Sollspektrum der Abstand bestimmt und/oder das Spektrometer auf den Sollabstand justiert.

Weitere Abweichungen zwischen den vom Bordspektrometer und vom Handgerät aufgenommenen Spektren können auch daraus resultieren, dass das in dem jeweiligen Spektrometer zur Beleuchtung dienende Licht eine unterschiedliche spektrale Zusammensetzung hat. Bevorzugt weist die Messeinrichtung deshalb eine Weißnormal-Messfläche auf, die in fester Position in der Druckmaschine angeordnet ist und vom Bordspektrometer angefahren werden kann, um das Weißnormal-Spektrum aufzunehmen und so etwaige Änderungen in der spektralen Zusammensetzung des Beleuchtungslichtes festzustellen. Falls sich die Eigenschaften der Lichtquelle für das Bordspektrometer seit der letzten Kalibrierung des Umrechnungsmoduls geändert haben, kann diese Änderung durch eine entsprechende Korrektur des Spektrums anhand des Weißnormal-Spektrums kompensiert werden.

Im folgenden werden ein Ausführungsbeispiele der Erfindung anhand der Zeichnung näher erläutert.

Es zeigen:
- Fig. 1: eine schematische perspektivische Darstellung einer erfindungsgemäßen Farbmesseinrichtung;
- Fig. 2: eine schematische Frontansicht der Farbmesseinrichtung nach Fig. 1;
- Fig. 3: ein Blockdiagramm einer Prozedur zur Kalibrierung der Farbmesseinrichtung;
- Fig. 4: ein Blockdiagramm einer Prozedur zur Farbmessung an einer Bedruckstoffbahn; und
- Fig. 5 und 6: Prinzipskizzen einer Farbmesseinrichtung gemäß einem anderen Ausführungsbeispiel.

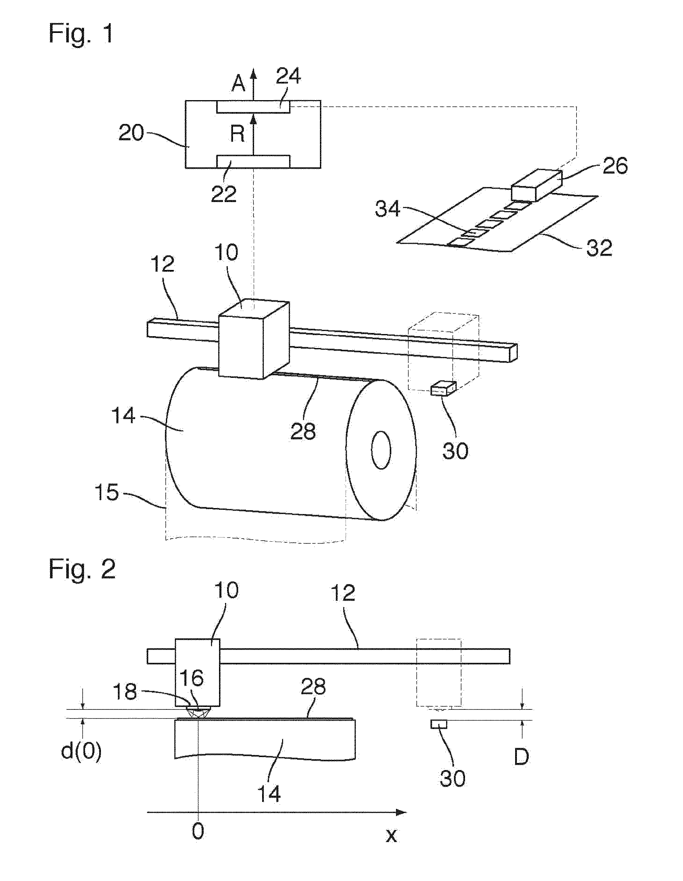

Die in Fig. 1 gezeigte Farbmesseinrichtung weist ein Bordspektrometer 10 auf, das mit Hilfe eines nicht näher gezeigten Antriebs längs einer Führungsschiene 12 bewegbar ist. Die Führungsschiene 12 ist in eine Rotationsdruckmaschine eingebaut, von der hier nur eine Walze 14 gezeigt ist. Die Führungsschiene 12 verläuft parallel zur Achse der Walze 14 und ist so im Gestell der Druckmaschine montiert, dass das Bordspektrometer 10 auf die Umfangsfläche der Walze 14 gerichtet ist. Während des Druckbetriebs ist der Teil der Umfangsfläche der Walze 14, auf den das Bordspektrometer 10 gerichtet ist, von einer Bedruckstoffbahn 15 umschlungen, die in Fig. 1 strichpunktiert angedeutet ist.

Wie Fig. 2 zeigt, weist das Bordspektrometer 10 ein auf die Umfangsfläche der Walze 14 gerichtetes Objektiv 16 auf, das von einer ringförmigen Lichtquelle 18 umgeben ist, durch die das Licht unter einem Winkel von 45° auf den vom Objektiv 16 erfassten Punkt auf der Walzenoberfläche gerichtet wird. Die Lichtquelle 18 wird beispielsweise durch eine Blitzlampe und einen Ringspiegel gebildet. Während eines Drucklaufes kann die Blitzlampe so mit dem Repeat der Formate auf der Bedruckstoffbahn synchronisiert sein, dass nach dem Stroboskop-Prinzip bei jedem Blitz der Blitzlampe ein Spektrum desselben Punktes in den auf die Bedruckstoffbahn gedruckten Druckbildern aufgenommen wird.

Das Bordspektrometer 10 ist an eine elektronische Verarbeitungseinheit 20 angeschlossen, die in Fig. 1 nur schematisch als Block dargestellt ist. Die Verarbeitungseinheit 20 weist eine Eingangsstufe 22 auf, in der das vom Bordspektrometer 10 gelieferte Spektrum aufgezeichnet wird und die außerdem an diesem Spektrum einige Korrekturen vornimmt, wie weiter unten noch näher erläutert werden wird. Auf diese Weise erzeugt die Eingangsstufe 22 Rohdaten R, die das korrigierte Spektrum charakterisieren. In einem Umrechnungsmodul 24 werden die Rohdaten R in Ausgabedaten A umgerechnet.

Das Umrechnungsmodul 24 ist mit einem externen Spektrometer 26 verbindbar und lässt sich anhand von Daten, die von diesem externen Spektrometer 26 geliefert werden, so kalibrieren, dass die Ausgabedaten A unmittelbar mit Daten vergleichbar sind, die das externe Spektrometer 26 für dasselbe Messobjekt liefern würde.

In Fig. 1 und 2 ist die Farbmesseinrichtung in einer Kalibrierungsphase dargestellt. In dieser Phase ist auf die Walze 14 ein Standard-Messobjekt 28 in der Form eines grauen oder weißen Klebestreifens aufgeklebt, der sich über die gesamte Länge der Walze 14 erstreckt. Die Walze 14 wird stationär in einer Winkelposition gehalten, in der das Standard-Messobjekt 28 dem Bordspektrometer 10 zugewandt ist, so dass in jeder Position des Spektrometers 10 längs der Führungsschiene 12 das Spektrum des Standard-Messobjekts 28 aufgenommen werden kann.

Das Bordspektrometer 10 ist längs der Führungsschiene 12 auch über das in Fig. 1 und 2 rechte Ende der Walze 14 hinaus in eine Position verfahrbar, in der es auf einen Weißnormalträger 30 gerichtet ist, der in einer festen Position im Gestell der Druckmaschine montiert ist. Die obere Oberfläche des Weißnormalträgers 30 wird durch eine als weißnormal dienende Kachel mit einer standardisierten spektralen Reflektivität gebildet. Die Oberfläche dieser Kachel liegt in gerader Verlängerung des streifenförmigen Standard-Messobjekts 28.

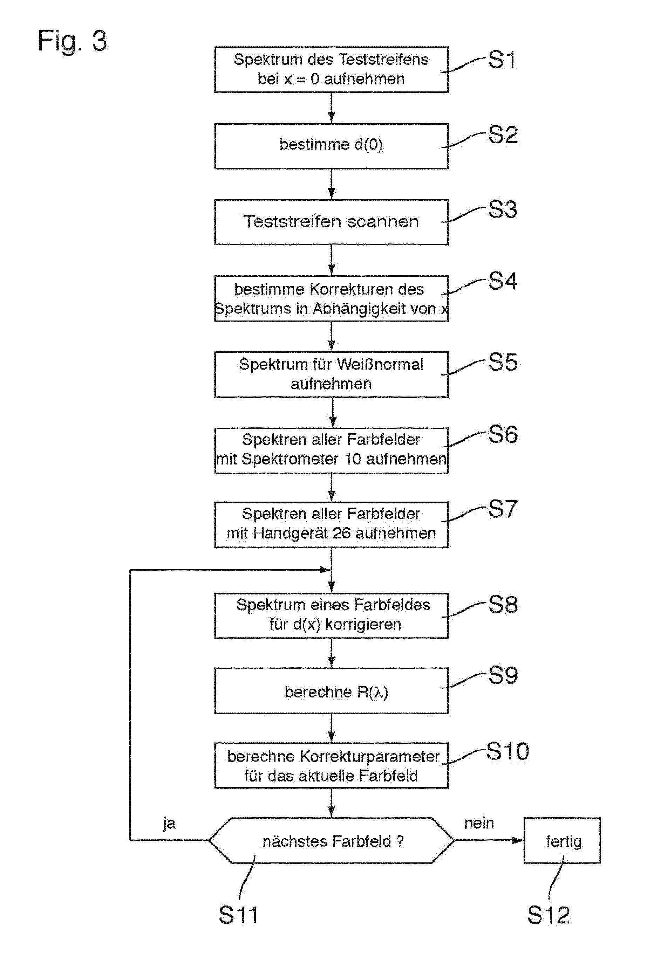

Die Kalibrierungsprozedur soll nun anhand der Figuren 1 und 2 und anhand des in Fig. 3 gezeigten Flussdiagramms erläutert werden.

In Schritt S1 wird das Bordspektrometer 10 in eine Referenzposition gefahren, die in Fig. 2 mit x = 0 bezeichnet ist (die x-Achse verläuft parallel zur Führungsschiene 12). In dieser Position wird mit dem Bordspektrometer 10 das Spektrum des Standard-Messobjekts 28 aufgenommen und gespeichert. Dieses Standard-Messobjekt 28 hat ein bekanntes Sollspektrum. Da jedoch die vom Bordspektrometer 10 gemessene spektrale Intensität vom Abstand d(0) abhängig ist, weicht das gemessene Spektrum etwas vom Sollspektrum ab. Da diese Abstandsabhängigkeit des Spektrums ebenfalls bekannt ist, lässt sich durch Vergleich des gemessenen Spektrums mit dem Sollspektrum (oder einer Folge von Sollspektren für unterschiedliche Abstände) der aktuelle Abstand d(0) bestimmen (Schritt S2) und/oder durch mechanische Nachjustierung des Spektrometers auf einen vorgegebnen Sollabstand einstellen.

In Schritt S3 wird dann der als Standard-Messobjekt 28 dienende Teststreifen auf ganzer Länge abgescannt, indem das Bordspektrometer 10 längs der Führungsschiene 12 bewegt wird und für jede x-Position das Spektrum des Standard-Messobjekts 28 aufgenommen wird. In Idealfall sollte man für jede x-Position dasselbe Spektrum erhalten wie in der Position x = 0. Da jedoch in der Praxis die Achse der Walze 14 und die Führungsschiene 12 nicht exakt parallel sein müssen, die Oberfläche der Walze 28 etwas von der idealen zylindrischen Gestalt abweichen kann, und auch die Führungsschiene 12 nicht exakt gerade sein muss, ist der tatsächliche Abstand zwischen dem Standard-Messobjekt 28 und dem Objektiv 16 im allgemeinen eine Funktion d(x), die in Abhängigkeit von der x-Position variiert. Dementsprechend weichen auch die in den verschiedenen x-Positionen aufgenommenen Spektren etwas voneinander ab.

Im Prinzip kann man durch Vergleich der gemessenen Spektren mit dem Sollspektrum die Funktion d(x) aufzeichnen und speichern, so dass später bei echten Messungen an der Bedruckstoffbahn eine entsprechende Korrektur des Spektrums vorgenommen werden kann. Alternativ ist es jedoch auch möglich, das in der Position x = 0 aufgenommene Spektrum als Referenzspektrum zu verwenden und für alle übrigen x-Positionen die Abweichungen des gemessenen Spektrums vom Referenz-Spektrum zu speichern (Schritt S4). Die Abweichungen können beispielsweise in der Form einer Funktion von x angegeben werden, die die Differenz zwischen dem gemessenen Spektrum und dem Referenzspektrum oder das Verhältnis zwischen dem gemessenen Spektrum und dem Referenzspektrum angibt. Im allgemeinen wird es zweckmäßig sein, die Abweichungen als Korrekturpolynome auszudrücken, so dass die Abweichungen in der Form von Polynomkoeffizienten gespeichert werden können.

In Schritt S5 wird dann das Bordspektrometer in die Position über dem Weißnormalträger 30 gefahren, wie in Fig. 1 und 2 strichpunktiert eingezeichnet ist, und es wird das Spektrum der Weißnormal-Messfläche aufgenommen und gespeichert. Da der Weißnormalträger 30 und die Führungsschiene 12 fest im Gestell der Druckmaschine montiert sind, ist der Abstand zwischen dem Weißnormalträger 30 und dem Objektiv 16 des Spektrometers unveränderlich, so dass hier keine Abstandskorrektur erforderlich ist. Die Messung des Weißnormal-Spektrums dient später zur Erkennung und ggf. Kompensation von (z.B. alterungsbedingten) Änderungen in der spektralen Zusammensetzung des Lichts der Lichtquelle 18.

In Fig. 1 ist das als Handgerät ausgebildete externe Spektrometer 26 über einem Abschnitt eines Substrats 32 gezeigt, das mit einer Vielzahl verschiedenfarbiger Farbfelder 34 bedruckt ist. Zum Drucken der Farbfelder 34 kann beispielsweise die Druckmaschine verwendet werden, in die die Farbmesseinrichtung eingebaut ist. Während das Substrat 32 mit den bereits gedruckten Farbfeldern 34 über die Walze 14 läuft, können die Spektren sämtlicher Farbfelder 34 mit dem Bordspektrometer 10 aufgenommen werden, das auf die entsprechende x-Position eingestellt ist. Wahlweise können die Farbfelder 34 jedoch auch auf einem separaten Bogen bereitgestellt werden, den man dann über die Walze 14 laufen lässt, um die Farbfelder mit dem Bordspektrometer 10 zu messen. Die Anzahl der Farbfelder 34 kann deutlich größer sein als in Fig. 1 gezeigt ist und kann beispielsweise 200 oder mehr betragen.

Nachdem in Schritt S6 die Spektren aller Farbfelder 34 mit dem Bordspektrometer 10 aufgenommen worden sind, werden die Spektren derselben Farbfelder in Schritt S7 auch mit dem externen Spektrometer 26 aufgenommen. Auch diese Spektren werden in der Verarbeitungseinheit 20 gespeichert. Der Schritt S7 kann selbstverständlich auch schon zu einem früheren Zeitpunkt ausgeführt werden.

In Schritt S8 wird dann das mit dem Bordspektrometer 10 aufgenommene Spektrum eines ersten Farbfeldes 34 der in Schritt S4 bestimmten Korrektur für den Abstand d(x) unterzogen. Diese Korrektur kann allerdings entfallen, wenn sich die Farbfelder 34 in der Position x = 0 befinden.

In Schritt S9 wird dann das abstandskorrigierte Spektrum anhand des in Schritt S5 auf genommenen Weißnormalspektrums korrigiert, so dass man die spektrale Reflektivität R(λ) des betreffenden Farbfeldes enthält. Im Idealfall entspricht das Spektrum des vom Weißnormalträger remittierten Lichts des spektralen Zusammensetzung von weißem Licht, so dass das abstandskorrigierte Spektrum unmittelbar die spektrale Reflektivität des betreffenden Farbfeldes angibt. In dem Fall dient die Aufnahme des Weißnormal-spektrums nur zur Kontrolle der Lichtquelle 18.

In Schritt S 10 wird dann die spektrale Reflektivität R(λ) mit dem Spektrum verglichen, das für dasselbe Farbfeld mit dem externen Spektrometer 26 aufgenommen wurde, und anhand der Abweichungen zwischen diesen Daten wird - beispielsweise durch lineare Regression - ein Satz von Korrekturparametern für das aktuelle Farbfeld berechnet. Die Korrekturparameter sind dabei so definiert, dass, wenn man die durch diese Parameter definierte Korrektur auf die spektrale Reflektivität R(λ) anwendet, wieder das mit dem externen Spektrometer 26 gemessene Spektrum erhält.

In Schritt S11 wird dann geprüft, ob noch weitere Farbfelder 34 vorhanden sind. Wenn das der Fall ist, erfolgt ein Rücksprung zu Schritt S8, und die Schritte S8 bis S11 werden zyklisch wiederholt, bis sämtliche Farbfelder 34 abgearbeitet und die Korrekturparameter für sämtliche Farbfelder bestimmt sind. Damit ist die Kalibrierungsprozedur abgeschlossen (Schritt S 12).

Wenn die Dicke des als Standard-Messobjekt 28 dienenden Klebestreifens nicht exakt mit der Dicke des Substrats 32 übereinstimmt, kann in Schritt S9 ein zusätzlicher (von der x-Position unabhängiger) Abstandsfehler auftreten. Dieser Fehler wird jedoch bei der Berechnung der Korrekturparameter in Schritt S10 automatisch mit kompensiert. Entsprechend können mit den Korrekturparametern auch Fehler bei der Messung des Referenzabstands d(0) kompensiert werden. Die Messung von d(0) ist deshalb nicht zwingend.

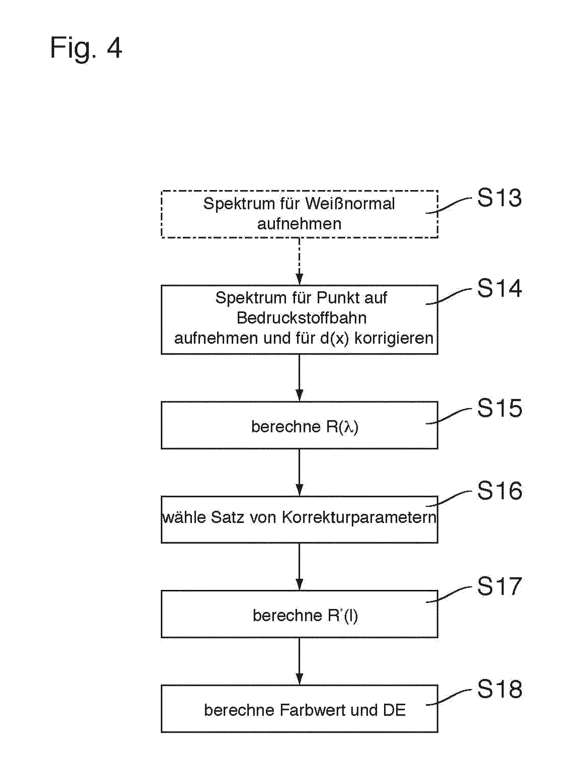

Fig. 4 ist ein Flussdiagramm, das eine Farbmessung illustriert, die nach der Kalibrierung der Farbmesseinrichtung bei laufender Druckmaschine vorgenommen werden kann.

Sofern die Möglichkeit besteht, dass sich die Eigenschaften der Lichtquelle 18 seit der letzten Messung verändert haben, wird vor Beginn des Drucklaufes in einem Schritt S13 noch einmal ein neues Weißnormal-Spektrum aufgenommen. Dazu wird das Bordspektrometer 10 in die in Fig. 1 und 2 strichpunktiert eingezeichnete Position gefahren. Das neue Weißnormal-Spektrum wird mit dem bei der Kalibrierung in Schritt S5 aufgenommenen Spektrum verglichen, und falls die beiden Spektrum voneinander abweichen, wird eine entsprechende Korrektur berechnet und gespeichert, mit der dann die später während der Farbmessungen aufzunehmenden Spektren korrigiert werden.

Nach Beginn des Drucklaufes wird das Bordspektrometer 10 auf den interessierenden Punkt im Druckbild gerichtet, und bei jedem Durchlauf eines Formats wird ein Spektrum dieses Punktes aufgenommen. Diese Spektren werden anhand der in Schritt S4 bestimmten Korrektur für den jeweiligen Abstand d(x) korrigiert.

In Schritt S15 wird anhand des in Schritt S5 aufgenommenen Weißnormal-Spektrums, ggf. unter Berücksichtigung der in Schritt S13 bestimmten Korrektur, die spektrale Reflektivität R(λ) für den interessierenden Punkt auf der Bedruckstoffbahn berechnet. Diese spektrale Reflektivität wird dann in Schritt S16 mit all den spektralen Reflektivitäten verglichen, die in Schritt S9 für die verschiedenen Farbfelder 34 berechnet wurden, und es wird dasjenige Farbfeld ausgewählt, für das die beste Übereinstimmung zwischen den spektralen Reflektivitäten besteht. Alternativ kann auch das in Schritt S 14 erhaltene Spektrum mit den in Schritt S6 aufgenommenen Spektren verglichen werden. In jedem Fall wird so ein Farbfeld definiert, dessen Farbe der Farbe des aktuell zu vermessenden Punktes auf der Bedruckstoffbahn am ähnlichsten ist. Der zu diesem Farbfeld gehörende Satz von Korrekturparametern wird dann in Schritt S16 für die weitere Verwendung im Umrechnungsmodul 24 ausgewählt. Ggf. kann dabei auch zwischen Korrekturparametern für mehrere Farbfelder interpoliert werden. Mit diesen Korrekturparametern wird in Schritt S17 die spektrale Reflektivität R(λ), die zugleich die Rohdaten R in Fig. 1 bildet, in eine korrigierte spektrale Reflektivität R*(λ) umgerechnet, die dann im Idealfall mit dem Spektrum übereinstimmen sollte, das das externe Spektrometer 26 für den betreffenden Punkt im Druckbild liefern würde.

In einer Ausführungsform kann die korrigierte spektrale Reflektivität R*(λ) unmittelbar die Ausgabedaten A bilden. In der hier gezeigten Ausführungsform wird jedoch in einem weiteren Schritt S18 anhand der korrigierten spektralen Reflektivität R*(λ) entsprechend den üblichen Standards ein Farbwert in einem geeigneten Farbraum (z.B. XYZ oder CIE-Lab) berechnet. Wahlweise oder zusätzlich kann auch eine Abweichung ΔE zwischen der Farbe des gemessenen Punktes und einer entsprechenden Referenzfarbe berechnet werden. Die Ausgabedaten A werden dann durch den berechneten Farbwert und/oder das berechnete ΔE gebildet und sollten wiederum mit entsprechenden Ausgabewerten des externen Spektrometers 26 übereinstimmen.

Wenn nach Abschluss des Drucklaufes der Drucker das externe Spektrometer 26 auf den Punkt der bedruckten Bedruckstoffbahn richtet, der während des Drucklaufes mit dem Bordspektrometer 10 überwacht wurde, kann er sich vergewissern, dass die von der erfindungsgemäßen Messeinrichtung gelieferten Ausgabedaten A in der Tat eine hohe Übereinstimmung mit den vom externen Spektrometer 26 gelieferten Daten auf weisen.

Wenn als externes Spektrometer 26 ein Handgerät eines anderen Fabrikats verwendet wird, lässt sich die erfindungsgemäße Farbmesseinrichtung mit der in Fig. 3 gezeigten Prozedur so umkalibrieren, dass wieder eine Vergleichbarkeit der Ausgabedaten mit den Daten des neuen Handgeräts erreicht wird.

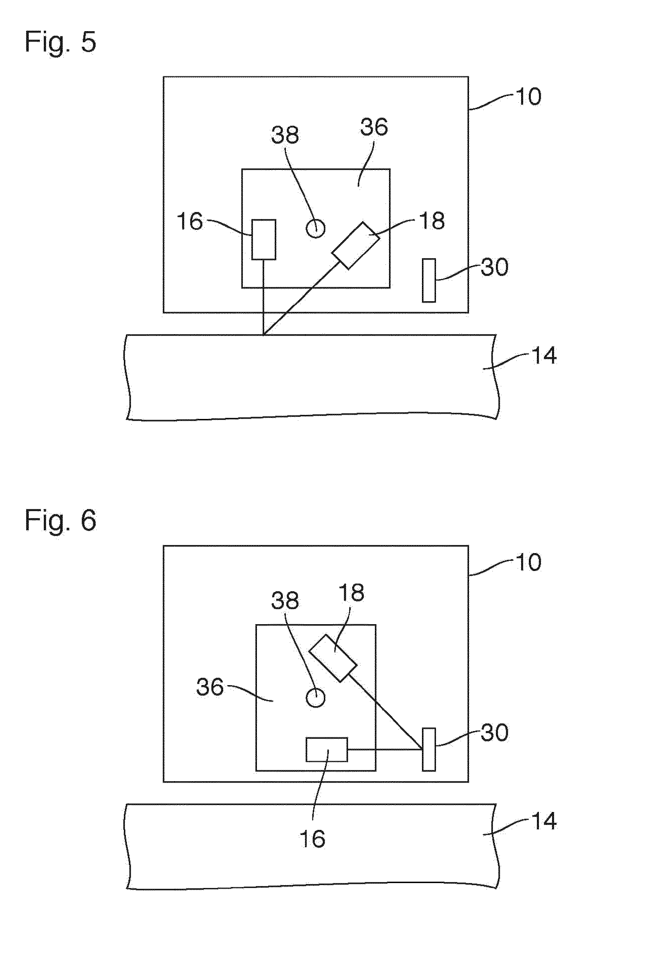

Fig. 5 und 6 illustrieren eine Farbmesseinrichtung gemäß einem anderen Ausführungsbeispiel, bei der der Weißnormalträger 30 in das Bordspektrometer 10 integriert ist. Das Objektiv 16 und die Lichtquelle 18 sind auf einer gemeinsamen Plattform 36 montiert, die um eine Achse 38 drehbar ist. In dem in Fig. 5 gezeigten Zustand sind das Objektiv 16 und die Lichtquelle 18 auf einen Punkt auf der Oberfläche der Walze 14 gerichtet. Zur Aufnahme des Weißnormalspektrums wird die Plattform 36 in die in Fig. 6 gezeigte Position gedreht, in der das Objektiv und die Lichtquelle auf den Weißnormalträger 30 gerichtet sind.

## Patentansprüche

1. Farbmesseinrichtung für Druckmaschinen, mit einem in die Druckmaschine einzubauenden Bordspektrometer (10) zur Aufnahme eines Spektrums eines Punktes auf einer Bedruckstoffbahn (15), und mit einer elektronischen Verarbeitungseinheit (20) zur Auswertung des Spektrums und zur Erzeugung von Rohdaten (R), die das Ergebnis der Farbmessung charakterisieren, **dadurch gekennzeichnet, dass** die Verarbeitungseinheit (20) ein auf ein externes Spektrometer (26) kalibrierbares Umrechnungsmodul (24) enthält, das dazu eingerichtet ist, die Rohdaten (R) in Ausgabedaten (A) zu konvertieren, die dem erwarteten Ergebnis einer Farbmessung mit dem externen Spektrometer (26) für denselben Punkt auf der Bedruckstoffbahn entsprechen.

2. Farbmesseinrichtung nach Anspruch 1, bei der das Bordspektrometer (10) längs einer Führungsschiene (12) verstellbar ist, die so in die Druckmaschine einbaubar ist, dass sie parallel zu einer von der Bedruckstoffbahn (15) umschlungenen Walze (14) dieser Druckmaschine verläuft und das Bordspektrometer auf die Bedruckstoffbahn gerichtet ist.

3. Farbmesseinrichtung nach Anspruch 2, mit einer Einrichtung zur Messung des Abstands d(x) zwischen dem Bordspektrometer (10) und der Umfangsfläche der Walze (14) oder eines darauf angebrachten Standard-Messobjekts (28) als Funktion der Position x des Bordspektrometers längs der Führungsschiene (12).

4. Farbmessenrichtung nach Anspruch 2 oder 3, bei der das Bordspektrometer (10) längs der Führungsschiene (12) in eine Position verfahrbar ist, in der es das Spektrum eines in der Druckmaschine installierten Weißnormalträgers (30) aufnimmt.

5. Farbmessenrichtung nach Anspruch 2 oder 3, bei der ein Objektiv (16) und eine Lichtquelle (18) des Bordspektrometers (10) in eine Position schwenkbar sind, in der das Objektiv das Spektrum eines in das Bordspektrometer (10) integrierten Weißnormalträgers (30) aufnimmt.

6. Verfahren zum Kalibrieren des Umrechnungsmoduls (24) einer Farbmesseinrichtung nach einem der Ansprüche 2 bis 5 auf ein externes Spektrometer (26), mit den folgenden Schritten:
a) aufnehmen eines Spektrums mindestens eines Farbfeldes (34) auf einem über die Walze (14) laufenden Substrat (32),
b) aufnehmen des Spektrums desselben Farbfelds (34) mit dem externen Spektrometer (26),
c) abtasten eines streifenförmigen Standard-Messobjekts (28) auf der Umfangsfläche der Walze (14) mit dem Bordspektrometer (10) und Aufnehmen der Spektren des Standard-Messobjekts (28) für verschiedene Positionen x des Bordspektrometers längs der Führungsschiene (12), zur Bestimmung von Korrekturen zur Kompensation von Änderungen des Abstands d(x) zwischen dem Bordspektrometer und der Oberfläche des Standard-Messobjekts in Abhängigkeit von der Position x, und
d) bestimmen von Korrekturparametern für das Umrechnungsmodul (24) anhand der mit dem Bordspektrometer (10) und dem externen Spektrometer (26) aufgenommenen Spektren und der in Schritt c) bestimmten Korrekturen.

7. Verfahren nach Anspruch 6, bei dem die Schritte a), b) und d) für mehrere verschiedenfarbige Farbfelder (34) wiederholt werden und für jedes Farbfeld ein Satz von Korrekturparametern gespeichert wird.

8. Verfahren für eine Farbmessung mit der Farbmesseinrichtung nach einem der Ansprüche 2 bis 5, die nach dem Verfahren gemäß einem der Anspruch 6 oder 7 kalibriert wurde, mit den folgenden Schritten:
- aufnehmen des Spektrums eines ausgewählten Punktes auf der Bedruckstoff bahn (15) mit dem Bordspektrometer (10),
- korrigieren des Spektrums für den Abstand d(x),
- umrechnen des korrigierten Spektrums anhand der Korrekturparameter.

9. Verfahren nach Anspruch 8, für Farbmessungen mit einer Farbmesseinrichtung, die gemäß Anspruch 7 kalibriert wurde, bei dem das mit dem Bordspektrometer (10) aufgenommene Spektrum mit den in der Kalibrierungsphase gespeicherten Spektren der Farbfelder (34) verglichen wird und Korrekturparameter für die Umrechnung bestimmt werden, indem zwischen Sätzen von Korrekturparametern interpoliert wird, die zu Farbfeldem gehören, die am besten mit der Farbe des ausgewählten Punktes auf der Bedruckstoffbahn übereinstimmen.
